# EUROPÄISCHE PATENTSCHRIFT

(11) **EP 1 971 455 B1**
(45) Veröffentlichungstag und Bekanntmachung des Hinweises auf die Patenterteilung: **09.09.2009**
(21) Anmeldenummer: 06754712.5
(22) Anmeldetag: 12.07.2006
(51) Int. Cl.: B23C 5/08, B23D 61/06

(54) **WERKZEUGSYSTEM FÜR SPANABHEBENDE BEARBEITUNG**
TOOL SYSTEM FOR MACHINING
SYSTÈME D OUTILLAGE POUR UN USINAGE PAR ENLÈVEMENT DE COPEAUX

(30) Priorität: 13.01.2006 DE 102006001747
(43) Veröffentlichungstag der Anmeldung: 24.09.2008
(73) Patentinhaber: Hartmetall-Werkzeugfabrik Paul Horn GmbH, 72007 Tübingen (DE)
(72) Erfinder: OETTLE, Matthias, 72585 Riederich (DE)
(74) Vertreter: Keck, Stephan
(86) Internationale Anmeldenummer: PCT/EP2006/006806
(87) Internationale Veröffentlichungsnummer: WO 2007/087835

(56) Entgegenhaltungen:
- EP-A- 0 417 862
- EP-A- 1 591 179
- AT-U1- 6 940
- US-A- 80 929
- US-A- 4 443 136
- US-A- 5 092 212

## Beschreibung

Die Erfindung betrifft ein Werkzeugsystem für spanabhebende Bearbeitung gemäß dem Oberbegriff des Anspruchs 1, einen Schneideinsatz gemäß dem Oberbegriff des Anspruchs 11 und einen Werkzeugsystem-Grundkörper gemäß dem Oberbegriff des Anspruchs 12.

Werkzeugsysteme dieser Art sind bekannt, vgl. US 4,443,136 oder EP 1 591 179 A2. Bei derartigen Systemen ist der Schneideinsatz, vorzugsweise in Form einer Schneidplatte, mit einer im Abstand von der Anlagefläche vorstehenden Schneide so geformt, dass er in der Aufnahme einsetzbar ist. Wird der Schneideinsatz nach dem Einsetzen in der.Aufnahme verdreht; so dass sich seine Anlagefläche entlang der Abstützfläche an der Aufnahme bewegt, erfolgt eine Fixierung des Schneideinsatzes aufgrund einer Exzentrizität der Krümmungen der zusammenwirkenden Flächen.
Aus der AT 006 940 U1 ist eine Schneidwerkzeuganordnung mit spiralenförmiger Klemmbacke bekannt, die mindestens einen geklemmten Schneideinsatz und einen Schneideinsatzhalter mit Halterausnehmungen umfasst. Der Schneideinsatz ist in einem Kreissegment mittels einer elastisch spreizbaren Klemmbacke, deren eine Seitenfläche Teil einer konkav geformten Halterausnehmung ist, in den Schneideinsatzhalter geklemmt.
Im Hinblick auf Betriebssicherheit und höchste Genauigkeit bei den spanenden Bearbeitungsvorgängen ist eine einwandfreie Lagefixierung des Schneideinsatzes in der Aufnahme von ausschlaggebender Bedeutung. Die Erfindung stellt sich daher die Aufgabe, ein Werkzeugsystem für spanabhebende Bearbeitung zur Verfügung zu stellen, das den Anforderungen bezüglich der Lagefixierung des Schneideinsatzes in besonders hohem Maße gerecht wird.

Erfindungsgemäß ist diese Aufgabe durch ein Werkzeugsystem für spanabhebende Bearbeitung gelöst, das die Merkmale des Patentanspruches 1 in seiner Gesamtheit aufweist.

Dadurch, dass gemäß Anspruch 1 die Anlagefläche von Schneideinsatz und die Abstützfläche an der Aufnahme voneinander verschiedene Krümmungslinien definieren, von denen zumindest eine hinsichtlich der Art der Krümmung von der Kreisform abweicht, eröffnet sich die Möglichkeit, aufgrund der Drehbewegung des Schneideinsatzes eine gewünschte Zunahme der resultierenden Klemmkraft in Abhängigkeit von der Zunahme des Verdrehwinkels zu realisieren.

Im Einklang mit dem aus US 4,443,136 bekannten Stand der Technik, wo sowohl für Anlagefläche als auch Abstützfläche jeweils ein zirkularer Krümmungsverlauf vorgesehen ist, ist ebenfalls bei der Erfindung erreichbar, dass der Schneideinsatz in Ausgangs-Drehstellung in freier Zugänglichkeit und bequem in die Aufnahme einsetzbar ist und dass bei nachfolgender Verdrehung eine ansteigende Klemmkraft mit einem Maximum bei Erreichen der Endstellung des Schneideinsatzes erzeugt wird.

Erfindungsgemäß entspricht der Verlauf der von der Kreisform abweichenden Krümmungslinie größtenteils einer Helix.

Wenn als Schneideinsatz eine Schneidplatte mit einer Anlagefläche vorgesehen ist, die zumindest bereichsweise einer einem Kreisbogen entsprechenden Krümmungslinie nachfolgt, ist der helixförmige Verlauf der Krümmungslinie an der Abstützfläche der Aufnahme vorgesehen. Die Steigung der Helix ist in diesem Falle so orientiert, dass an der Abstützfläche die Krümmung der Konkavität in der Drehrichtung der Schneidplatte zunimmt.

Bei vorteilhaften Ausführungsbeispielen weist die Abstützfläche an einem Ende der Aufnahme einen einem geradlinigen Verlauf folgenden Endabschnitt zur Anlage einer Gegenhaltefläche auf, die an der Schneidplatte zur Abstützung gegen die im Betrieb wirkenden Schneidkräfte vorgesehen ist.

Dieser Endabschnitt nimmt nicht nur die im Betrieb an der Schneide der Schneidplatte erzeugten Schneidkräfte auf, sondern bildet in Zusammenwirkung mit der Gegenhaltefläche der Schneidplatte einen ersten Anschlag zur Festlegung der Dreh-Endstellung der Schneidplatte. Gleichzeitig schließt sich der helixförmige Verlauf der Abstützfläche an das innere Ende des geraden Endabschnittes an, wobei sich dieser Verlauf bis zum Ende der Abstützfläche erstreckt.

Hierbei kann die Anordnung so getroffen sein, dass an der Aufnahme, dem Ende des helixförmigen Verlaufes der Abstützfläche nachgeordnet, eine gegen das Innere der Helix vorspringende Anschlagfläche vorhanden ist, die eine Abstützung für eine weitere Gegenhaltefläche bildet, die an der Schneidplatte zur Abstützung gegen Schneidkräfte vorgesehen ist und einen weiteren Anschlag bildet, der die Dreh-Endstellung der Schneidplatte definiert.

Bei besonders vorteilhaften Ausführungsbeispielen ist die Aufnahme in der Art einer Tasche in einem Grundkörper ausgebildet, in dem eine Schlitzöffnung ausgeschnitten ist, die ein einen Großteil des helixförmigen Verlaufs der Abstützfläche umgebendes, elastisch nachgiebiges Klemmteil im Grundkörper frei schneidet, welches Klemmteil vor der Anschlagfläche endet. Während somit im entsprechenden Bereich des helixförmigen Verlaufes eine kraftschlüssige Klemmung der Schneidplatte erfolgt, wobei die Klemmkraft von den Elastizitätseigenschaften, d. h. dem frei geschnittenen Materialquerschnitt des Klemmteiles abhängig ist, bildet die Anschlagfläche, die von dem frei geschnittenen Klemmteil abgesetzt ist, einen formschlüssigen Anschlag für die zugeordnete Gegenfläche der Schneidplatte.

Um zu gewährleisten, dass die Schneidplatte auch gegen quer zur Schneidkraft wirkende Querkräfte einwandfrei fixiert ist, kann die Abstützfläche zur seitlichen Fixierung einer Schneidplatte, die mit einer in umgekehrter V-Form vorspringenden Anlagefläche versehen ist, eine V-förmige Vertiefung aufweisen.

Das erfindungsgemäße Werkzeugsystem ist in besondere Maße für eine Anwendung bei Rotationswerkzeugen geeignet, beispielsweise Fräswerkzeugen, wobei der Grundkörper eine um eine Werkzeugachse rotierbare Scheibe mit einer Mehrzahl von an ihrem Umfang verteilten Aufnahmen für Schneidplatten sein kann.

Gegenstand der Erfindung sind gemäß Anspruch 11 auch eine Schneidplatte und gemäß Anspruch 12 auch ein Werkzeugsystem-Grundkörper.

Nachstehend ist die Erfindung anhand eines in der Zeichnung dargestellten Ausführungsbeispieles im einzelnen erläutert. Es zeigen:
- Fig. 1 eine perspektivische Schrägansicht eines Ausführungsbeispieles des erfindungsgemäßen Werkzeugsystemes in Form eines Trennfräsers, wobei von der Mehrzahl von am Grundkörper aufzunehmenden Schneideinsätzen lediglich eine einzige Schneidplatte dargestellt ist;
- Fig. 2 eine gegenüber Fig. 1 in weit größerem Maßstab, abgebrochen und perspektivisch dargestellte Ansicht lediglich des Bereiches einer Schneidplattenaufnahme des Grundkörpers von Fig. 1 ohne eingesetzte Schneidplatte;
- Fig. 3 eine der Fig. 2 entsprechende Ansicht, wobei in der Aufnahme eine Schneidplatte in einer vor der Fixierung eingenommenen Position gezeigt ist, und
- Fig. 4 eine der Fig. 3 entsprechende Ansicht, wobei die Schneidplatte in fixierter Endposition gezeigt ist.

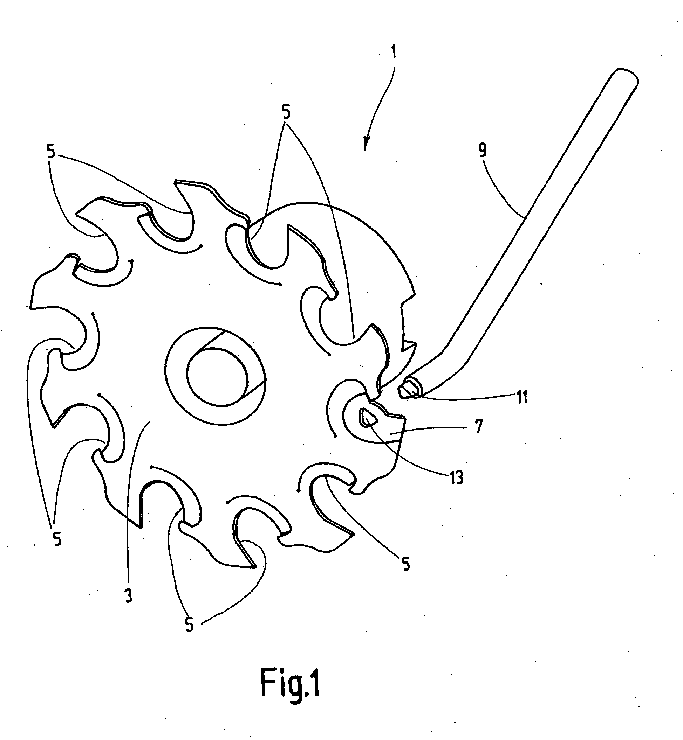

Nachstehend ist die Erfindung am Beispiel eines Trennfräsers erläutert, der in Fig. 1 als Ganzes mit 1 bezeichnet ist und einen scheibenartigen Grundkörper 3 aufweist, der in bekannter Art und Weise maschinell drehbar ist und an seinem Umfang verteilt eine Reihe von taschenartigen Aufnahmen 5 für Schneideinsätze in Form von Schneidplatten 7 aufweist. Wie aus Fig. 1 sowie 3 und 4 ersichtlich, haben die Schneidplatten 7 die Form einer Scheibe, deren zwischen ihren ebenen Seitenwänden gemessene Dicke der Dicke des Grundkörpers 3 entspricht. In üblicher Weise sind die Schneidplatten 7 in der betreffenden Aufnahme 5 durch eine Drehbewegung fixierbar und durch eine entgegengesetzt gerichtete Drehbewegung lösbar. Fig. 1 zeigt als Hilfswerkzeug für das Verdrehen der Schneidplatten 7 einen Polygonschlüssel 9 mit einem polygonförmigen Mitnehmer 11 für den Eingriff in eine entsprechende Polygonöffnung 13 in der Schneidplatte 7.

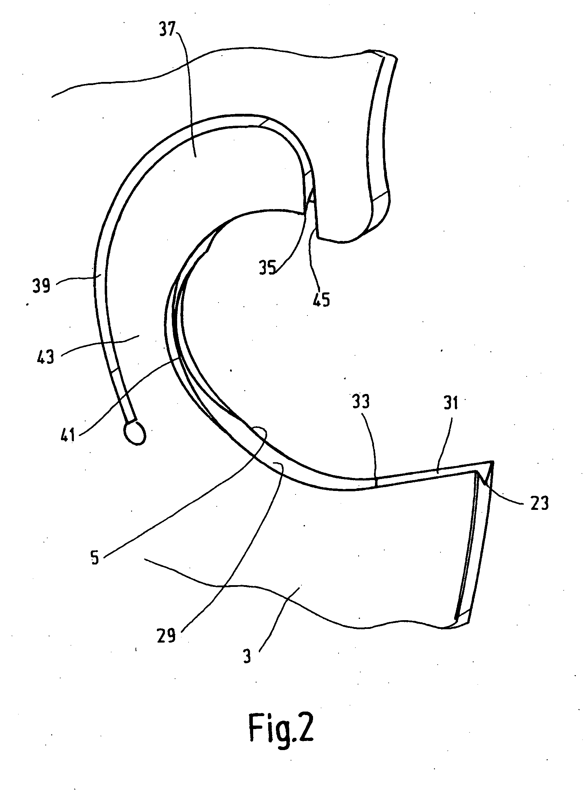

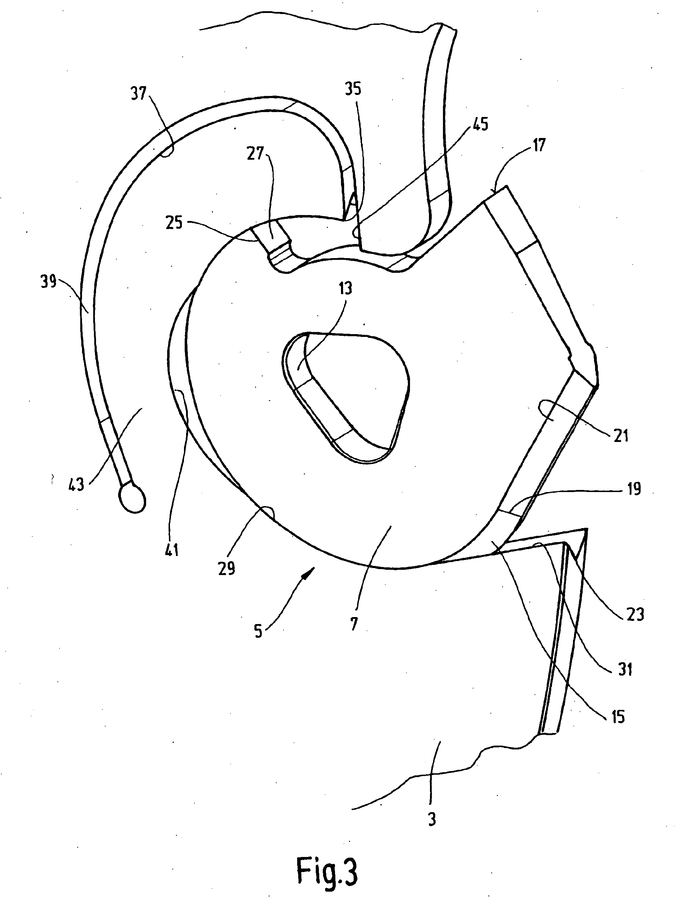

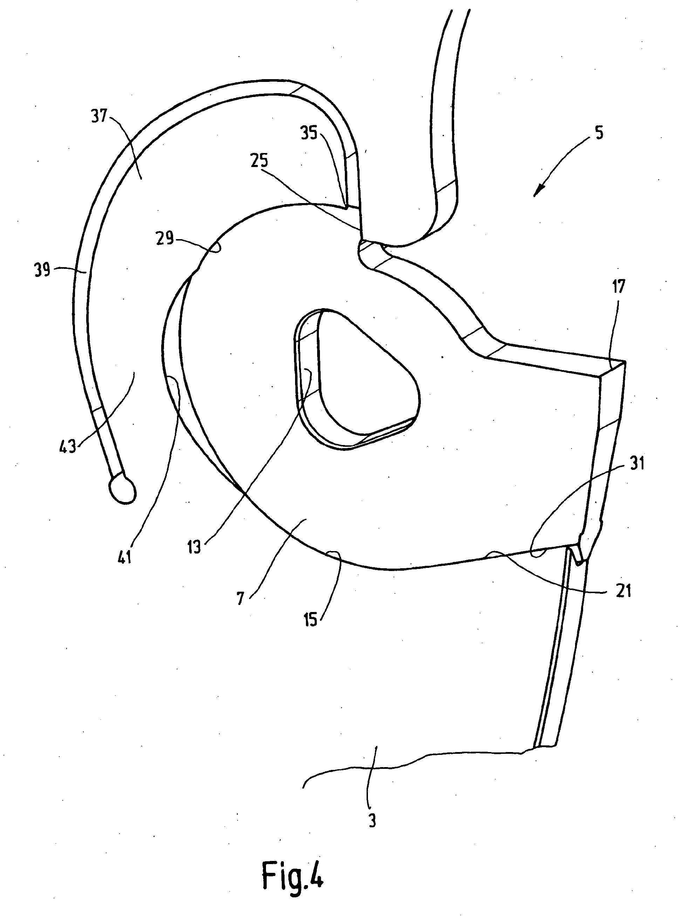

Fig. 2 bis 4 zeigen nähere Einzelheiten der Fixierung der Schneidplatten 7 in den Aufnahmen 5. Als Hauptelement hierfür ist an der Schneidplatte 7 eine Anlagefläche 15 konvexer Krümmung vorgesehen, deren Anfang und deren Ende jeweils in einem Abstand von der Schneide 17 der Schneidplatte 7 gelegen sind. Wie insbesondere aus Fig. 3 zu ersehen ist, schließt sich an den Anfang 19 der konkaven Krümmung der Anlagefläche 15 ein gerader Endteil 21 an, der an der Schneidplatte 7 eine Gegenhaltefläche bildet, die bei der in Fig. 4 gezeigten Fixierungs-Endposition die Schneidplatte 7 gegen die über die Schneide 17 wirkenden Schneidkräfte an der Aufnahme 5 abstützt. Wie Fig. 3 und 4 zeigen, sind Anlagefläche 15 und daran anschließender Endteil 21 profiliert, und zwar durch eine randseitige Querschnittsform in der Art eines umgekehrten V. In Zusammenwirkung mit einer entsprechenden V-Form einer Vertiefung 23 (Fig. 3) in der Aufnahme 5 ergibt sich eine Sicherung der Schneidplatte 7 gegen Seitenkräfte. Von der Anfangsstelle 19 ausgehend erstreckt sich der konvexe Verlauf der Anlagefläche 15 kreisbogenförmig bis zu dem im Abstand von der Schneide 17 gelegenen Ende 25 (Fig. 3), wo sich eine absatzartig nach innen verlaufende Fläche 27 anschließt. Diese Fläche 27 bildet, zusätzlich zum Endteil 21, welches eine erste Gegenhaltefläche bildet, eine weitere Gegenhaltefläche zur Abstützung gegenüber auf die Schneide 17 wirkende Schneidkräfte, wie unten noch näher beschrieben wird.

Als wesentliche Komponente zur Fixierung der Schneidplatte 7 weist die Aufnahme 5 eine eine Konkavität bildende Abstützfläche 29 auf, die wie erwähnt, eine V-förmige Vertiefung 23 bildet. An dem sich an den Außerumfang des Grundkörpers 3 anschließenden Ende weist die Abstützfläche 29 einen einem geradlinigen Verlauf folgenden Endabschnitt 31 auf, der sich mit einer dem geraden Endteil 21 der Schneidplatte 7 entsprechenden Länge vom äußeren Ende bis zu einer Anfangsstelle 33 (Fig. 2) erstreckt, wo der gekrümmte Verlauf der Abstützfläche 29 beginnt, der sich bis zum Ende 35 der Abstützfläche 29 erstreckt. Beim vorliegenden Beispiel entspricht dieser gekrümmte Verlauf einer Helix mit einer die Konkavität an der Aufnahme 5 verstärkenden Steigung. Bei einem praktischen Beispiel für eine Schneidplatte 7 mit einer Anlagefläche 15 mit einem Radius in der Größenordnung von 7mm kommt beispielsweise eine Helix mit einer Steigung von -0,27mm in Betracht, was über einen Winkelbereich von 200°, gemessen vom Anfang 33 bis zum Ende 35 der Abstützfläche 29, einer Radiusverkürzung von etwa 0,15mm entspricht.

Wird die Schneidplatte 7 aus einer der Fig. 3 entsprechenden Anfangsposition im Uhrzeigersinn verdreht, dann führt der helixförmige Verlauf der Abstützfläche 29 zu einer zunehmenden Klemmkraft zwischen Anlagefläche 15 und Abstützfläche 29. Diese Klemmkraft wirkt am Grundkörper 3 an einem elastisch nachgiebigen Klemmteil 37. Dieses ist durch eine bogenförmige Schlitzöffnung 39 im Grundkörper 3 frei geschnitten, wobei die Schlitzöffnung 39 so geführt ist, dass ein bogenförmiger Körper einen Großteil des helixförmigen Verlaufes der Abstützfläche 29 umgibt. Wie Fig. 2 zeigt, nimmt die Höhe der Seitenwände der V-förmigen Vertiefung 23 der Abstützfläche 29 in einem in der Länge der Abstützfläche 29 etwa mittig gelegenen Bereich 41 bis zum Grund der V-förmigen Vertiefung 23 ab. Dadurch ergibt sich im entsprechenden Abschnitt 43 des Klemmteiles 37 eine Verminderung des Materialquerschnittes, d. h. eine Materialschwächung zur Begünstigung der elastischen Nachgiebigkeit des Klemmteiles 37.

Wie Fig. 2 bis 4 zeigen, bildet der Grundkörper 3 vor dem Ende 35 der Abstützfläche 29 und damit vor dem entsprechenden Ende des Klemmteiles 37 eine gegen das Innere der Helix vorspringende Anschlagfläche 45. Bei der in Fig. 4 gezeigten Fixierungs-Endposition der Schneidplatte 7 bildet diese Anschlagfläche 45 eine Abstützung für die bereits erwähnte Fläche 27 am Ende 25 der Anlagefläche 15 der Schneidplatte 7. Diese weist somit zusätzlich zu der durch das Endteil 21 der Abstützfläche 15 gebildeten ersten Gegenhaltefläche eine zweite Gegenhaltefläche auf, nämlich die Fläche 27, die sich absatzartig an das Ende 25 der Anlagefläche 15 anschließt. Die Fläche 27 der Schneidplatte 7 dient in Verbindung mit der Fläche 45 des Grundträgers 3 auch als Abstützung gegen zum Beispiel durch Rotation entstehende Fliehkräfte.

Vorstehend ist die Erfindung anhand des Beispieles eines Fräswerkzeuges erläutert. Es versteht sich, dass die Erfindung gleichermaßen bei nichtrotierenden Werkzeugen anwendbar ist. Während der helixförmige Verlauf an der Konkavität vorgesehen und eine kreisbogenförmige Konvexität benutzt sind, versteht sich, dass zirkularer Verlauf auch an der Aufnahme und helixförmiger Verlauf an der Schneidplatte oder dass helixförmiger Verlauf sowohl an Schneidplatte als auch an Aufnahme vorgesehen sein könnten, wobei lediglich unterschiedliche Steigungen vorgesehen wären.

## Patentansprüche

1. Werkzeugsystem für spanabhebende Bearbeitung, mit mindestens einer Aufnahme (5) für einen Schneideinsatz (7), der zumindest teilweise mit einer Anlagefläche (15) konvexer Krümmung in Anlage mit einer Abstützfläche (29) konkaver Krümmung an der Aufnahme (5) bringbar ist,
**dadurch gekennzeichnet, dass** Konvexität und Konkavität von einander zugekehrter Anlagefläche (15) bzw. Abstützfläche (29) voneinander verschiedene Krümmungslinien definieren, von denen zumindest eine von der Kreisform abweicht, und
dass der Verlauf der von der Kreisform abweichenden Krümmungslinie der Anlagefläche (15) größtenteils einer Helix mit einer die Konvexität verstärkenden Steigung entspricht und/oder dass der Verlauf der von der Kreisform abweichenden Krümmungslinie der Abstützfläche (29) größtenteils einer Helix mit einer die Konkavität verstärkenden Steigung entspricht, so dass bei Verdrehung des Schneideinsatzes (7) eine ansteigende Klemmkraft mit einem Maximum bei Erreichen der Endstellung des Schneideinsatzes erzeugt wird.

2. Werkzeugsystem nach Anspruch 1, **dadurch gekennzeichnet, dass** für die Fixierung eines Schneideinsatzes in Form einer Schneidplatte (7) mit einer zumindest bereichsweise einem Kreisbogen entsprechender Krümmungslinie ihrer Anlagefläche (15) der helixförmige Verlauf der Krümmungslinie an der Abstützfläche (29) der Aufnahme (5) vorgesehen ist.

3. Werkzeugsystem nach Anspruch 2, **dadurch gekennzeichnet, dass** die Abstützfläche (29) an einem Ende der Aufnahme (5) einen einem geradlinigen Verlauf folgenden Endabschnitt (31) zur Anlage einer Gegenhaltefläche (21) aufweist, die an der Schneidplatte (7) zur Abstützung gegen die im Betrieb wirkenden Schneidkräfte vorgesehen ist.

4. Werkzeugsystem nach Anspruch 3, **dadurch gekennzeichnet, dass** der helixförmige Verlauf der Abstützfläche (29) am inneren Ende (33) des geraden Endabschnitts (31) beginnt und sich bis zum Ende (35) der Abstützfläche (29) erstreckt.

5. Werkzeugsystem nach Anspruch 4, **dadurch gekennzeichnet, dass** an der Aufnahme (5), dem Ende (35) des helixförmigen Verlaufes der Abstützfläche (29) nachgeordnet, eine gegen das Innere der Helix vorspringende Anschlagfläche (45) vorhanden ist, die eine Abstützung für eine weitere Gegenhaltefläche (27) bildet, die an der Schneidplatte (7) zur Abstützung gegen Schneidkräfte vorgesehen ist.

6. Werkzeugsystem nach Anspruch 5, **dadurch gekennzeichnet, dass** die Aufnahme (5) in der Art einer Tasche in einem Grundkörper (3) ausgebildet ist, in dem eine Schlitzöffnung (39) ausgeschnitten ist, die ein einen Großteil des helixförmigen Verlaufs der Abstützfläche (29) umgebendes, elastisch nachgiebiges Klemmteil (37) im Grundkörper (3) frei schneidet, welches Klemmteil (37) vor der Anschlagfläche (45) endet.

7. Werkzeugsystem nach einem der Ansprüche 2 bis 6, **dadurch gekennzeichnet, dass** die Abstützfläche (29) zur seitlichen Fixierung einer Schneidplatte (7) mit einer in umgekehrter V-Form vorspringenden Anlagefläche (15) eine V-förmige Vertiefung (23) aufweist.

8. Werkzeugsystem nach Anspruch 7, **dadurch gekennzeichnet, dass** die Höhe der Seitenwände der V-förmigen Vertiefung (23) innerhalb des helixförmigen Verlaufes der Abstützfläche (29) von einer Ausgangshöhe bis näherungsweise zum Grund (41) der Vertiefung (23) abnimmt und danach wieder bis zur Ausgangshöhe zunimmt.

9. Werkzeugsystem nach Anspruch 8, **dadurch gekennzeichnet, dass** der Bereich der verminderten Höhe der Seitenwände der Vertiefung (23) jeweils in einem Abstand von den beiden Enden der Abstützfläche (29) gelegen ist.

10. Werkzeugsystem nach Anspruch 6, **dadurch gekennzeichnet, dass** der Grundkörper (3) eine um eine Werkzeugachse rotierbare Scheibe mit einer Mehrzahl von an ihrem Umfang verteilten Aufnahmen (5) für Schneidplatten (7) ist.

11. Schneideinsatz für ein Werkzeugsystem für spanabhebende Bearbeitung, mit mindestens einer Aufnahme (5) für den Schneideinsatz (7), der zumindest teilweise mit einer Anlagefläche (15) konvexer Krümmung in Anlage mit einer Abstützfläche (29) konkaver Krümmung an der Aufnahme (5) bringbar ist,
**dadurch gekennzeichnet, dass** Konvexität und Konkavität von einander zugekehrter Anlagefläche (15) bzw. Abstützfläche (29) voneinander verschiedene Krümmungslinien definieren, von denen zumindest eine von der Kreisform abweicht, und
dass der Verlauf der von der Kreisform abweichenden Krümmungslinie der Anlagefläche (15) größtenteils einer Helix mit einer die Konvexität verstärkenden Steigung entspricht, so dass bei Verdrehung des Schneideinsatzes (7) eine ansteigende Klemmkraft mit einem Maximum bei Erreichen der Endstellung des Schneideinsatzes erzeugt wird.

12. Werkzeugsystem-Grundkörper für ein Werkzeugsystem für spanabhebende Bearbeitung, mit mindestens einer Aufnahme (5) für einen Schneideinsatz (7), der zumindest teilweise mit einer Anlagefläche (15) konvexer Krümmung in Anlage mit einer Abstützfläche (29) konkaver Krümmung an der Aufnahme (5) bringbar ist,
**dadurch gekennzeichnet, dass** Konvexität und Konkavität von einander zugekehrter Anlagefläche (15) bzw. Abstützfläche (29) voneinander verschiedene Krümmungslinien definieren, von denen zumindest eine von der Kreisform abweicht, und
dass der Verlauf der von der Kreisform abweichenden Krümmungslinie der Abstützfläche (29) größtenteils einer Helix mit einer die Konkavität verstärkenden Steigung entspricht, so dass bei Verdrehung des Schneideinsatzes (7) eine ansteigende Klemmkraft mit einem Maximum bei Erreichen der Endstellung des Schneideinsatzes erzeugt wird.

## Claims

1. A tool system for machining, having at least one receptacle (5) for a cutting insert (7) which can be brought at least partly with a bearing surface (15) of convex curvature into contact with a supporting surface (29) of concave curvature on the receptacle (5),
**characterized in that** convexity and concavity of bearing surface (15) and supporting surface (29), respectively, which face one another, define lines of curvature which are different from one another and of which at least one deviates from the circular form, and
that the course of the line of curvature of the bearing surface (15) mostly corresponds to a helix having a pitch intensifying the convexity and/or **in that** the course of the line of curvature of the supporting surface (29) mostly corresponds to a helix having a pitch intensifying the concavity, so that during rotation of the cutting insert (7) an increasing clamping force up to a maximum upon reaching the end position of the cutting insert is produced.

2. The tool system according to Claim 1, **characterized in that,** for fixing a cutting insert in the form of a cutting tip (7) having a line of curvature of its bearing surface which corresponds to an arc of a circle at least in a certain region, the helical course of the line of curvature is provided on the supporting surface (29) of the receptacle (5).

3. The tool system according to Claim 2, **characterized in that** the supporting surface (29), at one end of the receptacle (5), has an end section which follows a rectilinear course and is intended for contact with a counterholding surface (31) which is provided on the cutting tip (7) for supporting against cutting forces acting during operation.

4. The tool system according to Claim 3, **characterized in that** the helical course of the supporting surface (29) starts at the inner end (33) of the straight end section (31) and extends up to the end (35) of the supporting surface (29).

5. The tool system according to Claim 4, **characterized in that,** following the end (35) of the helical course of the supporting surface (29), there is a stop surface (45) on the receptacle (5), said stop surface (45) projecting towards the interior of the helix and forming a support for a further counterholding surface (27) which is provided on the cutting tip (7) for supporting against cutting forces.

6. The tool system according to Claim 5, **characterized in that** the receptacle (5) is designed like a pocket in a parent body (3) in which a slot opening (39) is cut out, and this slot opening (39) cuts free an elastically flexible clamping part (37) in the parent body (3), which clamping part (37) surrounds a large part of the helical course of the supporting surface (29) and ends in front of the stop surface (45).

7. The tool system according to one of Claims 2 to 6, **characterized in that** the supporting surface (29) has a V-shaped recess (23) for laterally fixing a cutting tip (7) having a bearing surface (15) projecting in an inverted V shape.

8. The tool system according to Claim 7, **characterized in that** the height of the side walls of the V-shaped recess (23) within the helical course of the supporting surface (29) decreases from an initial height down to approximately the root (41) of the recess (23) and then increases again up to the initial height.

9. The tool system according to Claim 8, **characterized in that** the region of the reduced height of the side walls of the recess (23) is in each case situated at a distance from both ends of the supporting surface (29).

10. The tool system according to Claim 6, **characterized in that** the parent body (3) is a disc rotatable about a tool axis and having a plurality of receptacles (5), distributed over its periphery, for cutting tips (7).

11. A cutting insert for a tool system for machining, having at least one receptacle for a cutting insert (5) which can be brought at least partly with a bearing surface (15) of convex curvature into contact with a supporting surface (29) of concave curvature on the receptacle (5),
**characterized in that** convexity and concavity of bearing surface (15) and supporting surface (29), respectively, which face one another, define lines of curvature which are different from one another and of which at least one deviates from the circular form, and
that the course of the line of curvature of the bearing surface (15) mostly corresponds to a helix having a pitch intensifying the convexity, so that during rotation of the cutting insert (7) an increasing clamping force up to a maximum upon reaching the end position of the cutting insert is produced.

12. A tool system parent body for a tool system for machining, having at least one receptacle (5) for a cutting insert (7) which can be brought at least partly with a bearing surface (15) of convex curvature into contact with a supporting surface (29) of concave curvature on the receptacle (5),
**characterized in that** convexity and concavity of bearing surface (15) and supporting surface (29), respectively, which face one another, define lines of curvature which are different from one another and of which at least one deviates from the circular form, and
that the course of the line of curvature of the supporting surface (29) mostly corresponds to a helix having a pitch intensifying the concavity, so that during rotation of the cutting insert (7) an increasing clamping force up to a maximum upon reaching the end position of the cutting insert is produced.

## Revendications

1. Système d'outillage pour un usinage par enlèvement de copeaux, comprenant au moins un logement (5) pour un insert de coupe (7) qui, par une surface d'application (15) de courbure convexe, peut être mis au moins partiellement en contact avec une surface d'appui (29) de courbure concave au niveau du logement (5),
**caractérisé en ce que** la convexité et la concavité respectivement de la surface d'application (15) et
de la surface d'appui (29) tournées l'une vers l'autre définissent des lignes de courbure différentes l'une et l'autre, dont au moins une diffère de la forme circulaire, et
**en ce que** l'allure de la ligne de courbure de la surface d'application (15) différant de la forme circulaire correspond en majeure partie à une hélice avec un pas amplifiant la convexité et/ou **en ce que** l'allure de la ligne de courbure de la surface d'appui (29) différant de la forme circulaire correspond en majeure partie à une hélice avec un pas amplifiant la concavité, de sorte que la torsion de l'insert de coupe (7) génère un effort de serrage croissant qui est maximum lorsque la position finale de l'insert de coupe est atteinte.

2. Système d'outillage selon la revendication 1, **caractérisé en ce que** l'allure hélicoïdale de la ligne de courbure est prévue au niveau de la surface d'appui (29) du logement (5) pour la fixation d'un insert de coupe sous forme de plaquette de coupe (7) avec une ligne de courbure de sa surface d'application (15) correspondant au moins dans un secteur à un arc de cercle.

3. Système d'outillage selon la revendication 2, **caractérisé en ce que** la surface d'appui (29) présente, à une extrémité du logement (5), une section d'extrémité (31) suivant une allure rectiligne pour l'application d'une surface de contre-appui (21), qui est prévue sur la plaquette
de coupe (7) pour supporter les efforts de coupe agissant lors du fonctionnement.

4. Système d'outillage selon la revendication 3, **caractérisé en ce que** l'allure hélicoïdale de la surface d'appui (29) commence au niveau de l'extrémité intérieure (33) de la section d'extrémité (31) rectiligne et s'étend jusqu'à l'extrémité (35) de la surface d'appui (29).

5. Système d'outillage selon la revendication 4, **caractérisé en ce qu'**est prévue au niveau du logement (5), en aval de l'extrémité (35) de l'allure hélicoïdale de la surface d'appui (29), une surface de butée (45) en saillie vers l'intérieur de l'hélice, qui forme un appui pour une autre surface de contre-appui (27), qui est prévue au niveau de la plaquette
de coupe (7) pour supporter les efforts de coupe.

6. Système d'outillage selon la revendication 5, **caractérisé en ce que** le logement (5) est réalisé dans un corps de base (3) à la manière d'une poche, dans lequel une ouverture de type fente (39) est découpée, qui libère par découpage dans le corps de base (3) un élément de serrage (37) élastiquement flexible, entourant une grande partie de l'allure hélicoïdale de la surface d'appui (29), lequel élément de serrage (37) se termine devant la surface de butée (45).

7. Système d'outillage selon l'une des revendications 2 à 6, **caractérisé en ce que** la surface d'appui (29) présente un évidement en forme de V (23) pour la fixation latérale d'une plaquette
de coupe (7) avec une surface d'application (15) en saillie en forme de V renversé.

8. Système d'outillage selon la revendication 7, **caractérisé en ce que** la hauteur des parois latérales de l'évidement en forme de V (23) diminue à l'intérieur de l'allure hélicoïdale de la surface d'appui (29), d'une hauteur initiale jusqu'à peu près au fond (41) de l'évidement (23) et augmente ensuite à nouveau jusqu'à la hauteur initiale.

9. Système d'outillage selon la revendication 8, **caractérisé en ce que** la zone de hauteur réduite des parois latérales de l'évidement (23) se situe respectivement à distance des deux extrémités de la surface d'appui (29).

10. Système d'outillage selon la revendication 6, **caractérisé en ce que** le corps de base (3) est un disque pouvant tourner autour d'un axe d'outillage et doté d'une pluralité de logements (5) pour plaquettes de coupe (7) répartis sur sa périphérie.

11. Insert de coupe destiné à un système d'outillage pour un usinage par enlèvement de copeaux, comprenant au moins un logement (5) pour l'insert de coupe (7) qui, par une surface d'application (15) de courbure convexe, peut être mis au moins partiellement en contact avec une surface d'appui (29) de courbure concave au niveau du logement (5),
**caractérisé en ce que** la convexité et la concavité respectivement de la surface d'application (15) et de la surface d'appui (29) tournées l'une vers l'autre définissent des lignes de courbure différentes l'une de l'autre, dont au moins une diffère de la forme circulaire, et
**en ce que** l'allure de la ligne de courbure de la surface d'application (15) différant de la forme circulaire correspond en majeure partie à une hélice avec un pas amplifiant la convexité, de sorte que la torsion de l'insert de coupe (7) génère un effort de serrage croissant qui est maximum lorsque la position finale de l'insert de coupe est atteinte.

12. Corps de base de système d'outillage destiné à un système d'outillage pour un usinage par enlèvement de copeaux, comprenant au moins un logement (5) pour un insert de coupe (7) qui, avec une surface d'application (15) de courbure convexe, peut être mis au moins partiellement en contact avec une surface d'appui (29) de courbure concave au niveau du logement (5),
**caractérisé en ce que** la convexité et la concavité respectivement de la surface d'application (15) et de la surface d'appui (29) tournées l'une vers l'autre définissent des lignes de courbure différentes l'une de l'autre, dont au moins une diffère de la forme circulaire, et
**en ce que** l'allure de la ligne de courbure de la surface d'appui (29) différant de la forme circulaire correspond en majeure partie à une hélice avec un pas amplifiant la concavité, de sorte que la torsion de l'insert de coupe (7) génère un effort de serrage croissant qui est maximum lorsque la position finale de l'insert de coupe est atteinte.
